(19) Europäisches Patentamt

European Patent Office

Office européen des brevets

(11) **EP 0 687 224 B1**

(12) **FASCICULE DE BREVET EUROPEEN**

(45) Date de publication et mention
de la délivrance du brevet:
**29.01.1997 Bulletin 1997/05**

(21) Numéro de dépôt: **94909015.3**

(22) Date de dépôt: **21.02.1994**

(51) Int. Cl.$^6$: **B60C 11/00**, B60C 3/00

(86) Numéro de dépôt international:
**PCT/EP94/00498**

(87) Numéro de publication internationale:
**WO 94/20316 (15.09.1994 Gazette 1994/21)**

(54) **PNEUMATIQUE A DEUX BANDES DE ROULEMENT AVEC UNE TRINGLE A ELASTICITE NON LINEAIRE**

LUFTREIFEN MIT ZWEI LAUFFLÄCHEN UND EINEM RING MIT NICHT LINEARER ELASTIZITÄT

TWIN-TREAD TYRE HAVING A NON-LINEAR ELASTICITY BEAD WIRE

(84) Etats contractants désignés:
**DE ES FR GB IT**

(30) Priorité: **01.03.1993 FR 9302537**

(43) Date de publication de la demande:
**20.12.1995 Bulletin 1995/51**

(73) Titulaire: **COMPAGNIE GENERALE DES ETABLISSEMENTS MICHELIN - MICHELIN & CIE
63040 Clermont-Ferrand Cédex (FR)**

(72) Inventeurs:
• **GERARD, François
F-63200 Riom (FR)**
• **PEYRAUD, Patrice
F-63400 Chamalières (FR)**

(74) Mandataire: **Devaux, Edmond-Yves
Michelin & Cie,
Service SGD/LG/PI Ladoux
63040 Clermont-Ferrand Cedex 01 (FR)**

(56) Documents cités:
EP-A- 0 465 786                    WO-A-90/14239
FR-A- 1 061 924                    US-A- 2 990 869

## Description

L'invention concerne un pneumatique possédant deux bandes de roulement distinctes espacées axialement par une zone de raccordement, constituée d'une rainure centrale et d'une tringle de renforcement disposée radialement sous ladite rainure, l'armature de carcasse dudit pneumatique s'étendant d'un bourrelet à l'autre en passant sous ladite tringle.

Le pneumatique concerné, généralement de rapport de forme H/B au plus égal à 0,60, repose sur le sol par l'intermédiaire d'une surface de contact aussi grande que possible. Ce pneumatique, comme écrit dans la demande française 2 187 56O, qui correspond au préambule de la revendication 1, présente ainsi une bonne adhérence sur sol sec et, du fait de la présence de la zone de raccordement entre les deux bandes de roulement une très bonne adhérence sur sol mouillé.

Un tel pneumatique, destiné principalement à équiper des véhicules rapides, présente cependant un certain nombre d'inconvénients dus à la vitesse et en particulier des usures irrégulières transversales et/ou circonférentielles.

Afin de remédier aux inconvénients cités, la présente invention propose un pneumatique comportant deux bandes de roulement espacées axialement l'une de l'autre par une zone de raccordement comprenant une rainure et en son milieu une tringle de renforcement de rayon inférieur à celui des bandes de roulement, caractérisé en ce que la tringle de renforcement présente une courbe, donnant la force de tension circonférentielle en fonction de l'allongement relatif, non linéaire, monotone, croissante, possédant en chacun de ses points une tangente dont le coefficient angulaire est positif, et composée de trois segments OA, AB, BR, un premier segment 0A pour lequel la rigidité d'extension circonférentielle est sensiblement constante et permettant un allongement aisé de la tringle, un deuxième segment BR pour lequel la rigidité d'extension circonférentielle est sensiblement constante et supérieure à la rigidité afférente au premier segment OA, les deux segments OA et BR étant réunis par un segment AB fortement courbé, ladite courbe C étant incluse dans une région du plan délimitée par deux courbes C1 et C2, chacune de ces courbes étant formée de segments successifs rectilignes :

- la première courbe C1 comprenant un premier segment allant de l'origine O à un point A1 d'allongement relatif égal à 0,01 et possédant un coefficient angulaire de $12.10^4$ daN, suivi d'un deuxième segment allant au-delà du point A1 et possédant un coefficient angulaire de $28.10^4$ daN.

- la deuxième courbe C2 comprenant un premier segment allant de l'origine 0 à un point A2 d'allongement relatif égal à 0,01 et possédant un coefficient angulaire de $2.10^4$ daN, un deuxième segment allant du point A2 à un point B2 d'allongement relatif égal à 0,025 et ayant un coefficient angulaire de $4.10^4$ daN, ce deuxième segment étant suivi d'un troisième segment allant au-delà du point B2 et possédant un coefficient angulaire de $6.10^4$ daN.

Ainsi sous l'effet de la force centrifuge due à la vitesse, la tringle de renforcement de la zone de raccordement peut s'allonger aisément jusqu'à un certain allongement relatif et permettre ainsi aux deux bords intérieurs respectivement des deux bandes de roulement d'augmenter leurs rayons, cette variation des rayons intérieurs étant alors semblable à la variation des rayons des bords axialement extérieurs des bandes de roulement.

Le pneumatique concerné peut ainsi conserver un profil de bande de roulement dont les courbures transversales sont sensiblement constantes en fonction de la vitesse de roulage, ce qui permet une usure plus régulière de la bande de roulement et en conséquence une durée de vie sur usure plus longue.

On entend par allongement d'une tringle de diamètre intérieur $\varnothing$ la différence de longueurs circonférentielles de la tringle mise sous effort de tension circonférentielle. Si $\varnothing'$ est le diamètre intérieur de la tringle sous effort de tension, l'allongement est $\pi (\varnothing'-\varnothing)$ et l'allongement relatif est $(\varnothing'-\varnothing)/\varnothing$ .

Le coefficient angulaire de la tangente à une courbe est le rapport de l'accroissement de la force de traction sur l'accroissement unitaire d'allongement relatif. Si l'on prend comme accroissement unitaire 1 % d'allongement relatif, le coefficient angulaire est donné en daN, unité de force. Ce coefficient angulaire mesure, en chaque point de la courbe représentant la force de traction en fonction de l'allongement relatif, la rigidité d'extension circonférentielle de la tringle pour un allongement relatif déterminé.

La tringle, conforme à l'invention, possède donc une rigidité à l'extension circonférentielle non linéaire en fonction de l'allongement relatif compris entre l'allongement nul et l'allongement à la rupture. Cette rigidité peut être cependant constante sur un certain intervalle d'allongement relatif pour croître ensuite jusqu'à l'allongement à la rupture.

Les tringles, à extensibilité non linéaire, utilisées par l'invention peuvent être réalisées de plusieurs manières. Une telle tringle peut être une tringle de type paquet, c'est-à-dire une tringle composée de plusieurs éléments de renforcement parallèles entre eux, ou d'un seul élément de renforcement enroulé plusieurs fois. Les éléments de renforcement sont des câbles présentant aussi une courbe de tension en fonction de l'allongement relatif non linéaire, ces câbles étant extensibles jusqu'à un allongement relatif donné pour devenir pratiquement inextensibles dudit allongement relatif à leur propre allongement de rupture.

Elle peut être avantageusement formée de fils ondulés, de manière continue ou de manière discontinue sur leur longueur, les nombres d'ondulations, l'amplitude et la période des ondulations étant telles que les fils deviennent rectilignes à partir d'un allongement relatif donné. Les fils peuvent être nus ou gainés de caoutchouc avant ondulation, et peuvent après ondulation assemblés entre eux sous forme de bandes ou nappes étroites à l'aide d'un enrobage entre couches d'un mélange caoutchouteux.

La tringle à extensibilité non linéaire peut aussi être réalisée par enroulement en hélice de câble ou fil de renforcement métallique, selon un pas approprié, autour d'une âme discontinue circonférentiellement. Elle peut aussi être constituée d'un ensemble de câbles, de type paquet, un câble étant constitué d'une âme à faible force de rupture autour de laquelle on a enroulé hélicoidalement un fil ou un toron métallique selon un pas approprié, un toron étant déjà un assemblage de plusieurs fils élémentaires.

Préférentiellement, cette tringle de renforcement devra résister aux déformations imposées par le roulage, puisque située radialement près du sol hors du passage dans l'ellipse de contact du pneumatique avec ledit sol, et aura en conséquence une rigidité de flexion circonférentielle faible, c'est-à-dire une flexion dont le moment est dans le plan de la tringle. Un telle tringle est avantageusement formée d'âme et de fils ou câbles textiles ; et préférentiellement en polyamide alliphatique ou aromatique. De telles réalisations de tringle, selon l'invention, confèrent au renforcement une souplesse de flexion beaucoup plus grande que la tringle classique, ce qui améliore nettement l'endurance dudit renforcement.

Les caractéristiques et avantages de la présente invention seront mieux compris à l'aide de la description qui suit et qui se réfère au dessin, illustrant à titre non limitatif des exemples d'exécution et sur lequel :

- la figure 1 représente une section transversale d'un pneumatique de dimension 235-45-17-X conforme à l'invention, d'une part avant roulage (en traits pleins) d'autre part en roulage à une vitesse de 2400 tour/minute (en traits pointillés) ;

- la figure 2 représente la courbe $F = f(\varepsilon)$ donnant la force de tension exercée sur la tringle utilisée en fonction de l'allongement relatif, ainsi que la portion de plan délimitée par les courbes C1 et C2 ;

- les figures 3A et 3B représentent des variantes de tringle répondant à des courbes semblables à celle de la figure 2 ;

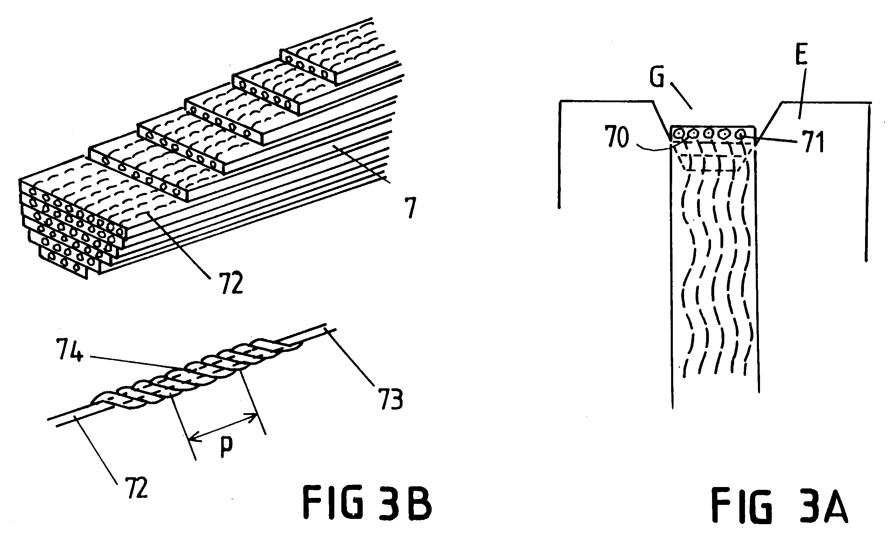

la figure 3A concerne une tringle réalisée par enroulement d'une bande formée de fils ondulés ;
la figure 3B concerne une tringle réalisée par enroulement d'un câble à âme cassante autour de laquelle sont enroulés des fils inextensibles.

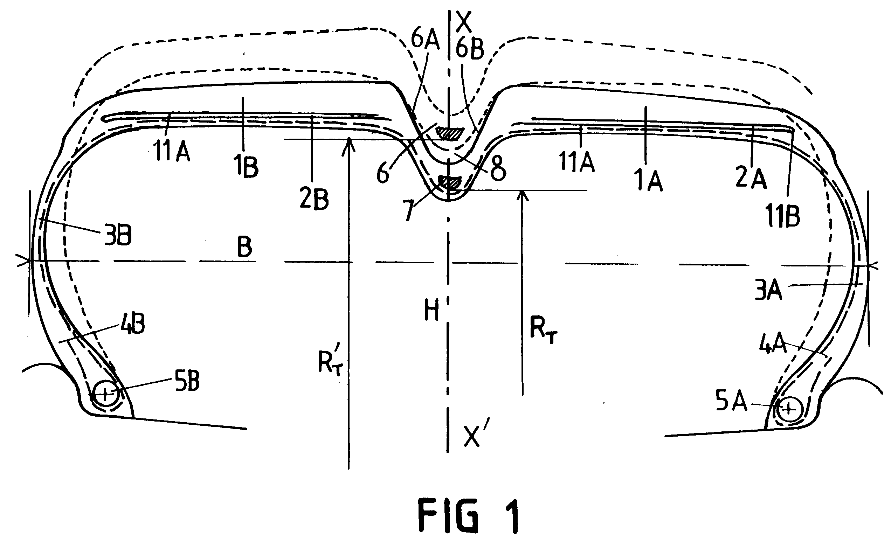

Le pneumatique, représenté sur la figure 1, a un rapport de forme H/B égal à 0,45, H étant la hauteur sur jante et B la largeur axiale maximale. Il comprend deux bandes de roulement identiques (1A) et (1B), renforcés par deux armatures identiques (2A) et (2B).

Il comprend en outre deux flancs (3A) et (3B) se terminant par des bourrelets (4A) et (4B) contenant chacun une tringle de type tressée (5A) et (5B) pratiquement inextensible. Les deux bandes de roulement (1A) et (1B) sont reliées par une zone de raccordement (6), constituée de deux portions de flanc (6A) et (6B) entourant une rainure (8) de la tringle de renforcement (7).

Cette tringle de renforcement (7) est composée d'un câble métallique élastique E 18.23, formé de 18 fils de diamètre 23/100 et enrobé d'un mélange caoutchouteux. Ce câble est enroulé sur une forme d'enroulement appropriée pour former quatre couches de, respectivement, 7, 6, 6 et 5 spires.

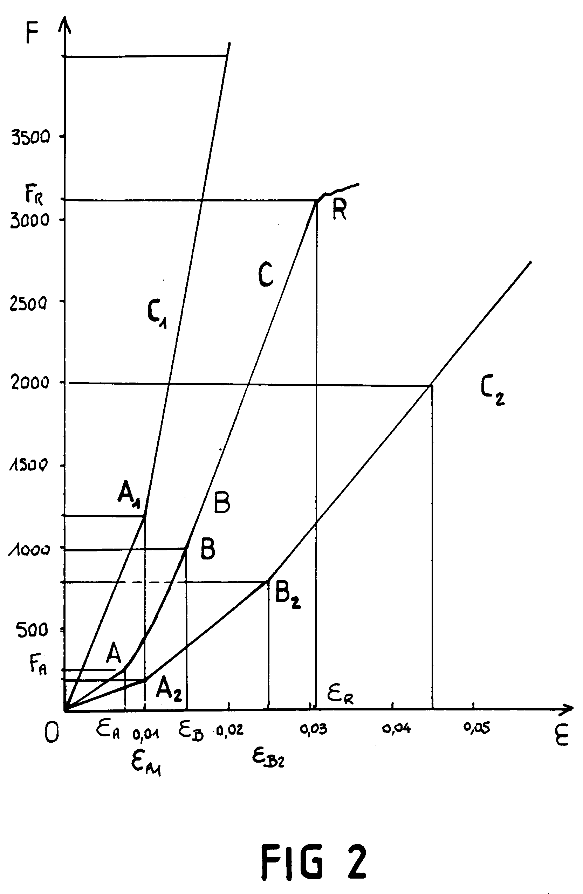

Cette tringle (7) a une courbe C (figure 2) donnant la force de traction circonférentielle F en fonction de l'allongement relatif $\varepsilon$ telle que représentée sur la figure 2. Cette courbe peut être décomposée en trois segments OA, AB, BR, les deux segments OA et BR étant très légèrement curvilignes alors que le segment AB réunissant les deux précédents est fortement courbé. Du point O origine de la courbe $F = f(\varepsilon)$ au point A de ladite courbe de coordonnées $\varepsilon_A$, étant égal à 0,0074, et $F_A$ égale à 250 daN, la rigidité d'extension circonférentielle de la tringle peut être considérée comme constante et égale à 33800 daN. Du point B de la courbe, de coordonnées $\varepsilon_B$ égal à 0,0147, et $F_B$ égale à $10^3$ daN au point R correspondant à la rupture de la tringle et de coordonnées $\varepsilon_R$, égal à 0,0306, et $F_R$ égale à 3125 daN, la rigidité d'extension circonférentielle de la tringle est pratiquement constante et égale à 133 600 daN.

La courbe C est incluse dans la portion du plan de la figure comprise entre les deux courbes C1 et C2. La courbe C1 est composée de deux segments : un premier segment OA1, un deuxième segment allant au-delà de A1, le point A1 ayant pour abcisse $E_{A1}$, égal à 0,01, et le segment OA1 ayant pour coefficient angulaire une valeur égal à $12.10^4$ daN, alors que le segment ayant pour origine A1 a un coefficent angulaire de $28.10^4$ daN. La courbe C2 est composée, comme montrée, de deux segments, OA2, A2 B2 et d'un troisième segment allant au-delà du point B2. Les points A2 et B2 ont pour abcisses respectivement $\varepsilon_{A2}$, égal à $\varepsilon_{A1}$ et 0,01, et $\varepsilon_{B2}$, égal à 0,025, les coefficients angulaires des trois segments étant respectivement $2.10^4$ daN, $4.10^4$ daN et $6.10^4$ daN.

Le(s) câble(s) qui compose(nt) la tringle (7) a(ont) de(s) courbe(s) représentant la force de traction imposée à un câble en fonction de l'allongement relatif du câble semblable à la courbe F, fonction de $\varepsilon$, relative à la tringle. En particulier du point O origine au point A, un câble E18.23 possède un accroissement de force de traction circonférentielle égal à 17 daN pour un accroissement d'allongement relatif unitaire de 0,01.

De manière identique, du point B au point de rupture dudit câble, celui-ci possède un accroissement de force de traction circonférentielle égal à 51 daN pour un accroissement d'allongement relatif unitaire de 0,01.

L'élasticité ainsi choisie de la tringle (7) permet à cette dernière d'augmenter, sous l'effet de la force centrifuge due à la vitesse de roulage, son diamètre qui passe d'une valeur égale à $2R_T$ à la valeur $2R'_T$ (figure 1), valeur plus compatible que la précédente avec l'augmentation du diamètre des bords axialement extérieurs des armatures de sommet (2A) et (2B). Il est évident que les caractéristiques d'élasticité de la tringle (7) de renforcement sont choisies comme étant les plus proches des caractéristiques qui permettraient d'obtenir une augmentation relative de diamètre identique à celles des bords des armatures (2A) et (2B). Industriellement cette identité n'est guère possible du point de vue économique, des tringles fabriquées en petite quantité étant trop coûteuses. Aussi est-il avantageux, après le choix de la tringle de renforcement (7) la plus adaptée en fonction de la vitesse maximale permise par un pneumatique, de parfaire ladite identité en prévoyant pour les armatures de sommet (2A) et (2B) des bords de nappes retournés, ce qui permet d'augmenter la rigidité des bords d'armature. Si la tringle de renforcement (7) est trop rigide en début de déformation, les bords axialement extérieurs des armatures (2A) et (2B) auront des nappes retournées. Inversement, si la tringle (7) est facilement extensible, les bords axialement intérieurs des armatures (2A) et (2B) seront avantageusement à nappes retournées. La figure 1 montre en traits pointillés le pneumatique conforme à l'invention monté sur jante, gonflé à une pression de $2,5.10^5$ Pa et soumis à une vitesse de rotation de 2400 tours/minute.

Dans ce pneumatique, les armatures (2A) et (2B) sont chacune formées d'une nappe (11A) qui est retournée sur elle-même, le retournement (11A) étant situé axialement à l'extérieur. Il est évident que l'armature composée d'une nappe retournée sur elle-même peut être remplacée par une armature équivalente, telle que par exemple une armature composée de deux nappes de fils ou câbles, les extrémités libres de ces nappes étant, d'un côté de ladite armature, surmontées radialement d'une bande ou nappe étroite de câbles orientées sensiblement à 0°, c'est-à-dire de câbles sensiblement parallèles à la direction circonférentielle du pneumatique.

La figure 3A représente une tringle utilisée dans un pneumatique conforme à l'invention. Cette tringle (7) de type paquet est obtenue par enroulement sur une forme d'enroulement E, présentant une gorge d'enroulement G, d'une bande ou ruban préfabriqué (70) de fils (71) totalement ondulés (seuls les axes moyens sont représentés) calandrés entre deux bandes de mélange caoutchouteux jusqu'à obtenir le nombre de couches nécessaires à la confection de la tringle (7).

la figure 3B représente une tringle (7) obtenue par enroulement sur une forme d'enroulement du même type que celle décrite précédemment d'un câble (72) à âme cassante ou très faible force de rupture et rectiligne, cette âme (73) étant recouverte extérieurement par des fils (74) enroulés hélicoïdalement selon un pas d'enroulement.

## Revendications

1. Pneumatique comportant deux bandes de roulement (1A) et (1B) espacées axialement l'une de l'autre par une zone de raccordement comprenant une rainure (8) et en son milieu une tringle de renforcement (7) de rayon $R_T$ inférieur à celui des bandes de roulement (1A, 1B), caractérisé en ce que la tringle (7) de renforcement présente une courbe C, donnant la force F de traction circonférentielle en fonction de l'allongement relatif $\varepsilon$, non linéaire, monotone, croissante, possédant en chacun de ses points une tangente dont le coefficient angulaire est positif, et composée de trois segments OA, AB, BR, un premier segment OA pour lequel la rigidité d'extension circonférentielle est sensiblement constante et permettant un allongement aisé de la tringle, un deuxième segment BR pour lequel la rigidité d'extension circonférentielle est sensiblement constante et supérieure à la rigidité afférente au premier segment OA, les deux segments OA et BR étant réunis par un segment AB fortement courbé, ladite courbe C étant incluse dans une région du plan délimitée par deux courbes C1 et C2, chacune de ces courbes étant formée de segments successifs rectilignes

   - la première courbe C1 comprenant un premier segment OA1 allant de l'origine 0 à un point A1 d'allongement relatif $\varepsilon_{A1}$ égal à 0,01 et possédant un coefficient angulaire de $12.10^4$ daN, suivi d'un deuxième segment allant au-delà du point A1 et possédant un coefficient angulaire de $28.10^4$ daN,
   - la deuxième courbe C2 comprenant un premier segment allant de l'origine 0 à un point A2 d'allongement relatif égal à 0,01 et possédant un coefficient angulaire de $2.10^4$ daN, un deuxième segment allant du point A2 à un point B2 d'allongement relatif égal à 0,025 et ayant un coefficient angulaire de $4.10^4$ daN, ce deuxième segment étant suivi d'un troisième segment allant au-delà du point B2 et possédant un coefficient angulaire de $6.10^4$daN.

2. Pneumatique selon la revendication 1, caractérisé en ce que la tringle (7) est composée de plusieurs câbles disposés parallèlement les uns aux autres.

3. Pneumatique selon la revendication 1, caractérisé en ce que la tringle (7) est formée de couches (70) de fils ondulés (71) dans le plan de chaque couche et disposés entre deux bandes de mélange caoutchouteux.

4. Pneumatique selon la revendication 1, caractérisé en ce que la tringle (7) est formée de câbles (72), chaque câble étant composé d'une âme (73) à très faible force de rupture, recouverte de fils (74) enroulés hélicoïdalement.

5. Pneumatique selon l'une des revendiations 2 à 4, caractérisé en ce que les fils ou câbles sont textiles, de préférence en polyamide alliphatique ou aromatique.

## Claims

1. A tyre having two treads (1A) and (1B), spaced axially from each other by a connecting zone comprising a groove (8) and, in its middle, a reinforcement bead wire (7) of a radius $R_T$ less than that of the treads (1A, 1B), characterised in that the reinforcement bead wire (7) has a curve C giving the circumferential tensile force F as a function of the relative elongation $\varepsilon$ which is non-linear, monotonic and increasing and has at each of its points a tangent the angular coefficient of which is positive, it being formed of three segments OA, AB and BR, a first segment OA for which the rigidity of circumferential extension is substantially constant and permits easy elongation of the bead wire, a second segment BR for which the rigidity of circumferential extension is substantially constant and greater than the rigidity relating to the first segment OA, the two segments OA and BR being connected by a strongly curved segment AB, said curve C being included within a region of the plane bordered by two curves C1 and C2, each of these curves being formed of successive rectilinear segments:

   - the first curve C1 comprising a first segment OA1 extending from the point of origin O to a point A1 of relative elongation $\varepsilon_{A1}$ equal to 0.01 and having an angular coefficient of $12 \times 10^4$ daN, followed by a second segment extending beyond the point A1 and having an angular coefficient of $28 \times 10^4$ daN,
   - the second curve C2 comprising a first segment extending from the point of origin O to a point A2 of relative elongation equal to 0.01 and having an angular coefficient of $2 \times 10^4$ daN, a second segment extending from the point A2 to a point B2 of a relative elongation equal to 0.025 and having an angular coefficient of $4 \times 10^4$ daN, this second segment being followed by a third segment extending beyond the point B2 and having an angular coefficient of $6 \times 10^4$ daN.

2. A tyre according to Claim 1, characterised in that the bead wire (7) is formed of several cables arranged parallel to each other.

3. A tyre according to Claim 1, characterised in that the bead wire (7) is formed of layers (70) of undulated cords (71) in the plane of each layer, arranged between two strips of rubber mix.

4. A tyre according to Claim 1, characterised in that the bead wire (7) is formed of cables (72), each cable being formed of a core (73) of very low rupture force, covered with helically wound cords (74).

5. A tyre according to any one of Claims 2 to 4, characterised in that the cords or cables are textile ones, preferably of aliphatic or aromatic polyamide.

## Patentansprüche

1. Reifen mit zwei Laufflächen (1A) und (1B), die axial voneinander durch eine Verbindungszone beabstandet sind, die eine Rille (8) und in ihrer Umgebung einen Verstärkungsdraht (7) mit einem Radius $R_T$ aufweist, der kleiner ist als der der Laufflächen (1A, 1B), dadurch **gekennzeichnet**, daß der Verstärkungsdraht (7) eine Kurve C darbietet, die die Umfangs-Traktionskraft F als Funktion der relativen Längung $\varepsilon$ angibt, die nichtlinear, monoton und zunehmend ist, in jedem ihrer Punkte eine Tangente aufweist, deren Winkelbeiwert positiv ist, sowie aus drei Segmenten OA, AB, BR zusammengesetzt ist, einem ersten Segment OA, für das die Umfangs-Dehnungssteifigkeit im wesentlichen konstant ist und eine mühelose Längung des Drahtes gestattet, und einem zweiten Segment BR, für das die Umfangs-Dehnungssteifigkeit im wesentlichen konstant ist und größer als die Steifigkeit, die dem ersten Segment OA zukommt, wobei die beiden Segmente OA und BR von einem Segment AB verbunden sind, das stark gekrümmt ist, wobei die genannte Krümmung C in einem Bereich der Ebene eingeschlossen ist, die durch zwei Kurven C1 und C2 begrenzt ist, und wobei jede dieser Kurven von aufeinanderfolgenden, geradlinigen Segmenten gebildet ist:

   - die erste Kurve C1 weist ein erstes Segment OA1 auf, das vom Ursprung 0 bis zu einem Punkt A1 verläuft, mit relativer Langung $\varepsilon_{A1}$ gleich 0,01, und das einen Winkelbeiwert von $12,10^4$ daN besitzt, gefolgt von einem zweiten Segment, das jenseits des Punktes A1 verläuft und einen Winkelbewert von $28,10^4$ daN besitzt, und
   - die zweite Kurve C2 weist ein erstes Segment auf, das vom Ursprung 0 bis zu einem Punkt A2 verlauft, mit einer relativen Längung gleich 0,01, und das einen Winkelbeiwert von $2,10^4$ daN besitzt, ein zweites Segment, das vom Punkt A2 bis zu einem Punkt B2 verläuft, mit einer relativen Längung gleich 0,025, und das einen Winkelbeiwert von $4,10^4$ daN besitzt, und dieses zweite Segment wird gefolgt von einem dritten Segment, das jenseits des Punkts B2 verlauft und einen Winkelbeiwert von $6,10^4$ daN aufweist.

2. Reifen nach Anspruch 1, dadurch **gekennzeichnet,** daß der Draht (7) zusammengesetzt ist aus mehreren Seilen, die parallel zueinander angeordnet sind.

3. Reifen nach Anspruch 1, dadurch **gekennzeichnet**, daß der Draht (7) aus Lagen (70) von Drähten (71) gebildet ist, die in der Ebene einer jeden Lage gewellt sind und zwischen zwei Bändern aus einer gummiartigen Mischung angeordnet sind.

4. Reifen nach Anspruch 1, dadurch **gekennzeichnet**, daß der Draht (7) aus Seilen (72) gebildet ist, und daß jedes Seil zusammengesetzt ist aus einer Seele (73) mit sehr geringer Bruchkraft, abgedeckt von Drähten (74), die wendelförmig herumgewickelt sind.

5. Reifen nach einem der Ansprüche 2 bis 4, dadurch **gekennzeichnet,** daß die Drähte oder Seile aus Textilmaterial bestehen, bevorzugt aus aliphatischem oder aromatischem Polyamid.

FIG 1

FIG 2

FIG 3A

FIG 3B